# EUROPÄISCHE PATENTSCHRIFT

(11) **EP 0 238 964 B1**
(45) Veröffentlichungstag und Bekanntmachung des Hinweises auf die Patenterteilung: **07.01.1993**
(21) Anmeldenummer: 87103783.4
(22) Anmeldetag: 16.03.1987
(51) Int. Cl.: G02B 6/12

(54) **Kantenfilter für die integrierte Optik**
Cut-off filter for integrated optics
Filtre de bout pour l'optique intégrée

(30) Priorität: 24.03.1986 DE 3609891
(43) Veröffentlichungstag der Anmeldung: 30.09.1987
(73) Patentinhaber: SIEMENS AKTIENGESELLSCHAFT, 80333 München (DE)
(72) Erfinder: März, Reinhard, Dr.phil.nat., D-8000 München 80 (DE)

(56) Entgegenhaltungen:
- EP-A- 0 110 184
- CA-A- 1 108 902
- DE-A- 3 610 333
- IEEE JOURNAL OF QUANTUM ELECTRONICS, Band QE-15, NR. 12, Dezember 1979, Seiten 1405-1408; S.H. KIM et al.: "Tunable Narrow-Band Thin-Film Waveguide Grating Filters".
- ELECTRONICS LETTERS, Band 22, Nr. 6, 13. MàRZ +)(&; Seiten 341-343, Stevenage, Herts, GB; I. BENNION et al.: "High-reflectivity monomode-fibre grating filters".
- APPLICATION PHYSICS LETTERS, Band 45, Nr. 12, 15. Dezember 1984, Seiten 1278-1280, Woodbury, New York, USA; R.C. ALFERNES et al.: "InGaAsP/InP waveguide grating filters for Lambda = 1,5 mikrometer".
- PROCEEDING 5TH IOOC AND 11TH ECOC, Oktober 1985, Seite 171, Venise, USA; R.C. ALFERNES et al.: "Narrowband Grating Resonator Filters in InGaAsP/InP Waveguides".
- APPLIED OPTICS, Band 22, Nr. 24, Dezember 1983, Seiten 4088-4092, New York, USA, Z.Y. YIN et al.: "Photoinduced grating filters in Ge02 thin-film waveguides".

## Beschreibung

Die vorliegende Erfindung betrifft ein Kantenfilter für die integrierte Optik nach dem Oberbegriff des Patentanspruchs 1.

Unter einem Kantenfilter der genannten Art ist im folgenden ein Filter zu verstehen, das im Vergleich zu einem Filter in Form eines reliefartigen Oberflächengitters mit konstanter Korrugationstiefe und -periode auf einem Schicht- oder Streifenwellenleiter gleichmäßiger Schichtdicke eine bessere Seitenbandunterdrückung aufweist.

Ein Kantenfilter der genannten Art ist aus P.S.Cross, H. Kogelnik: Sidelobe Suppression in Corrugated-Waveguide Filters" in Optics Lett. 1 (1977) S. 43 ff bekannt. Bei diesem Filter wird die bessere Seitenbandunterdrückung durch eine Variation der Korrugationstiefe und -periode des Gitters entsprechend einer vorgegebenen mathematischen Funktion erreicht. Geeignete Funktionen sind angegeben.

Kantenfilter der genannten Art kommen für integriertoptische Wellenlängenmultiplex-Schaltkreise für die optische Kommunikation in Frage (siehe Seite 43, linke Spalte, Absatz 1 der genannten Druckschrift).

Aufgabe der Erfindung ist es, ein einfach herstellbares Kantenfilter der eingangs genannten Art anzugeben.

Diese Aufgabe wird durch die im kennzeichnenden Teil des Patentanspruchs 1 angegebenen Merkmale gelöst.

Bei dem erfindungsgemäßen Kantenfilter ist die oben näher angegebene Kantenfiltereigenschaft dadurch erreicht, daß das Gitter in einem Bereich verminderter Schichtdicke des Wellenleiters ausgebildet ist. Aus der Theorie der Interferenzfilter ist bekannt, daß sich Kantenfilter durch ein Anheben bzw. Absenken der Brechzahl der umgebenden Medien bezüglich der Filterschichten realisieren lassen (siehe Optica Acta 28 (1981) 29). Die Struktur des Filters ist dabei allerdings auch von wesentlicher Bedeutung. Der Erfindung liegt die Erkenntnis zugrunde, daß durch die Ausbildung des Gitters in einem Bereich verminderter Schichtdicke des Wellenleiters auch bei einem Filter der eingangs genannten Art erreicht wird, daß die effektiven Brechzahlen im Bereich des Gitters kleiner als in den Gebieten vor und hinter dem Gitter sind.

Die einfache Herstellung des erfindungsgemäßen Kantenfilters ist dadurch bedingt, daß sich ein Gitter mit konstanter Korrugationstiefe und ein Bereich verminderter Schichtdicke des Wellenleiters besonders einfach und sogar in einem Verfahrensschritt herstellen lassen, wie später gezeigt wird.

Das Gitter ist vorzugsweise in einer Ebene (Anspruch 2) und/oder in einem Bereich mit konstanter verminderter Schichtdicke des Wellenleiters ausgebildet (Anspruch 3).

Zweckmäßig ist es, wenn sich das Gitter in einem Bereich verminderter Schichtdicke erstreckt, der durch eine im Wellenleiter ausgebildete Vertiefung definiert ist (Anspruch 4), wobei das Gitter vorzugsweise auf dem Boden der Vertiefung ausgebildet ist (Anspruch 5). Die Vertiefung weist vorzugsweise ein im wesentlichen trapez- oder kastenförmiges Profil auf (Anspruch 6).

In einer bevorzugten Ausgestaltung des erfindungsgemäßen Filters ist der das Gitter enthaltende Bereich verminderter Schichtdicke des auf einem Substrat aufgebrachten Streifen- oder Schichtwellenleiters mit einer Schicht abgedeckt, deren Brechzahl wie die des Substrats kleiner als die Brechzahl des Wellenleiters ist.

Eine besonders bevorzugte Ausführungsform dieser Ausgestaltung ist so ausgebildet, daß das Substrat und die den Streifen- oder Schichtwellenleiter abdeckende Schicht aus InP und der Streifen- oder Schichtwellenleiter selbst aus InGaAsP besteht (Anspruch 8).

Bei der Herstellung des Filters wird vorteilhafterweise so vorgegangen, daß ein Schicht- oder Streifenwellenleiter mit einer ein Fenster und im Fenster eine Gitterstruktur aufweisenden Ätzmaske abgedeckt und danach einem anisotrop wirkenden Ätzmittel so lange ausgesetzt wird, bis sich die Schichtdicke des Wellenleiters auf einen gewünschten Wert vermindert hat (Anspruch 9). Gitter und Schichtdickenverminderung bilden sich dabei gleichzeitig und von selbst aus.

Vorzugsweise wird die Ätzmaske mit dem Fenster und der Gitterstruktur im Fenster derart erzeugt, daß auf den Wellenleiter eine dünne Metallschicht mit einem Fenster und auf die Metallschicht eine Fotolackschicht aufgebracht wird, und daß die Fotolackschicht im Bereich des Fensters der Metallschicht mit einem der Gitterstruktur des zu erzeugenden Gitters (4) entsprechenden Lichtmuster belichtet und danach der Fotolack entwickelt wird (Anspruch 10).

Das rechteckförmige Fenster der Ätzmaske wird vorzugsweise so orientiert, daß die durch den anisotropen Ätzvorgang entstehenden Gitterlinien parallel zu den Seitenrändern des Rechtecks verlaufen.

Die Erfindung wird anhand der Figuren in der folgenden Beschreibung, aus der sich weitere Vorteile der Erfindung ergeben, näher erläutert. Von den Figuren zeigen:
- Figur 1: einen senkrecht zu den Gitterlinien verlaufenden Schnitt durch ein Kantenfilter, bei dem das Gitter in einem Bereich verminderter Schichtdicke des Wellenleiters ausgebildet ist,
- Figur 2: eine Draufsicht auf das Kantenfilter nach Figur 1,
- die Figuren 3 bis 6: der Figur 1 entsprechende Schnitte, die verschiedene Zwischenstufen bei der Herstellung des Filters nach Figur 1 und Figur 2 nach einem bestimmten Verfahren zeigen.

Die Figuren sind nicht maßstäblich.

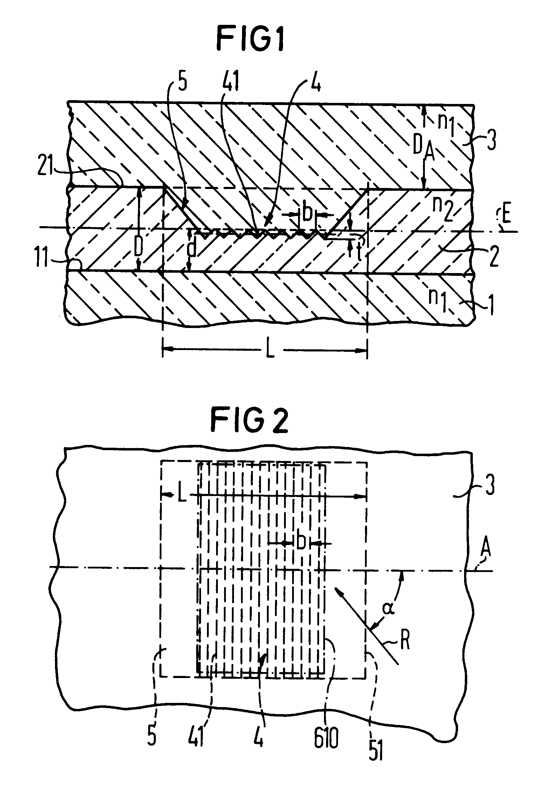

In dem Kantenfilter nach Figur 1 ist der Schicht- oder Streifenwellenleiter mit bereichsweise verminderter Schichtdicke mit 2 bezeichnet. Er besteht beispielsweise aus einer auf einem Substrat 1 aus InP epitaktisch aufgewachsenen Schicht aus InGaAsP und ist mit einer epitaktisch aufgewachsenen Schicht 3 aus InP abgedeckt. Der Wellenleiter 2 weist im Bereich L eine Vertiefung 5 auf, in der seine sonstige Dicke D auf die Dicke d vermindert ist, die in der Figur 1 gleich dem Abstand zwischen der zur Zeichenebene senkrechten Substratoberfläche 11 und der dazu parallelen Ebene E ist. Diese Ebene E definiert den Boden der Vertiefung 5, in dem das reliefartige Oberflächengitter 4 ausgebildet ist. Die Gitterlinien dieses Gitters 4 sind durch im Boden der Vertiefung 5 ausgebildete Furchen 41 definiert, die senkrecht zur Zeichenebene verlaufen und ein im wesentlichen dreieckförmiges Profil aufweisen. Die Furchen- oder Korrugationstiefe t ist durch den Abstand zwischen der tiefsten Stelle einer Furche von der Ebene E definiert und für alle Furchen des Gitters gleich.

In der in Figur 2 gezeigten Draufsicht auf das Kantenfilter nach Figur 1 bedeutet A die Gitterachse, die senkrecht zu den Furchen 41 und parallel zur Ebene E in Figur 1 verläuft. R zeigt die zur Ebene E parallele Richtung einer im Wellenleiter 2 in Figur 1 geführten Strahlung einer bestimmten Wellenlänge λ, die unter dem Einfallswinkel α auf das Gitter 4 einfällt. Die gestrichelte Linie 51 zeigt die Umrandung der Vertiefung 5 an, während die strichpunktierte Linie 610 den Rand eines die räumliche Ausdehnung des Gitters 4 bestimmenden Fensters 61 andeutet, auf das später näher eingegangen wird.

Als Beispiel sei ein Gitter 4 mit dreiecksförmigem Furchenprofil bei einem Einfallswinkel α = 60° für eine Wellenlänge λ = 1500 nm betrachtet. Die Dicke D_{A} der abdeckenden Schicht 3 aus InP ist 2 µm gewählt. Bei dieser Dicke D_{A} beträgt der maximale Wert der Dicke D des Wellenleiters 2, bei dem dieser noch transversal monomodig ist 0,9 µm. Die verminderte Dicke d des Wellenleiters 2 im Bereich des Gitters 4 ist 0,25 µm gewählt. Die Korrugationstiefe t ist 0,1 µm und die Gitterkonstante b = 0,5 µm gewählt. Die Brechzahl n₁ von InP beträgt 3,175 und die Brechzahl n₂ von InGaAsP ist 3,29. Die Gap-Wellenlänge des Wellenleiters 2 beträgt 1100 nm.

Bei diesen Materialien, Werten und Abmessungen nimmt in den Gebieten des Wellenleiters 2 mit der Dicke 0,9 µm, also außerhalb des Gitters 4, die effektive Brechzahl n_{A} für den TM-Modus den Wert 3,2513 an, während sie sich im Bereich des Gitters 4 zwischen 3,1827 und 3,1938 bewegt.

Die Einfügeverluste, die durch die Vertiefung 5 im Wellenleiter 2 entstehen, lassen sich generell durch eine Abdeckschicht 3 mit geeigneter Brechzahl in Grenzen halten. Eine rechnerische Untersuchung zeigte, daß bei dem angegebenen Beispiel Einfügeverluste von 1 bis 2 dB erwartet werden können. Diese Untersuchung zeigt auch, daß für Wellenlängen λ, die kleiner als 1500 nm sind, das Reflexionsvermögen des Gitters 4 in der Vertiefung 5 rascher abfällt, als bei einem eingangs erwähnten Vergleichsfilter, bei dem das Gitter auf einem Wellenleiter mit gleichmäßiger Schichtdicke ausgebildet ist, die gleich der Dicke d = 0,25 µm gewählt ist. Danach ist durch das beispielhafte Kantenfilter ein Tiefpaß bezüglich der Wellenlänge λ = 1500 nm realisiert.

Des weiteren zeigt die Untersuchung, daß bei einer geforderten Nebensprechdämpfung von 20 dB bezüglich optischer Leistung der minimale Kanalabstand für das beispielhafte Kantenfilter 30 nm und für das Vergleichsfilter 45 nm beträgt, während gleichzeitig die Breite des Sperrbereichs für das Kantenfilter sogar etwas größer ist.

Die genannten Ergebnisse wurden für TM-Moden gewonnen. Wegen der abdeckenden Schicht 3 aus InP sind jedoch die Unterschiede zwischen den effektiven Brechzahlen für TM- und TE-Moden gering, so daß polarisationsunabhängige Filter möglich sind.

Das Kantenfilter nach den Figuren 1 und 2 kann wie folgt hergestellt werden: Ausgangspunkt ist das Substrat 1 aus InP, auf dessen Oberfläche 11 der Schicht- oder Streifenwellenleiter 2 in Form einer Schicht aus InGaAsP der Dicke D aufgewachsen ist, also der Dicke, wie sie später außerhalb des Gitters 4 gewünscht ist. Auf die freie Oberfläche 21 des Wellenleiters 2 wird eine dünne Metallschicht 6, beispielsweise aus Gold und beispielsweise mit einer Dicke von nur etwa 5 nm aufgebracht, beispielsweise durch Aufsputtern. Auf diese Metallschicht 6 wird Fotolack aufgeschleudert. Danach wird eine Maskenbelichtung durchgeführt und dann naßchemisch, beispielsweise mit einer Mischung aus 90g Jod, 200g Kaliumjodid und 200g Wasser, in der Metallschicht 6 das oben erwähnte Fenster 61 freigeätzt, in dessen Bereich später das Gitter 4 ausgebildet wird. Das rechteckförmige Fenster 61 ist auf der Oberfläche 21 des Wellenleiters 2 so ausgerichtet, daß bei einem späteren anisotropischen Ätzprozeß, bei dem das Gitter 4 durch Freilegen der (lll)-Flächen des InGaAsP-Kristalls geätzt wird, die entstehenden Furchen 41 mit Dreiecksprofil des Gitters 4 parallel zu einer Randseite des Fensters 61 verlaufen, so wie es in der Figur 2 angedeutet ist.

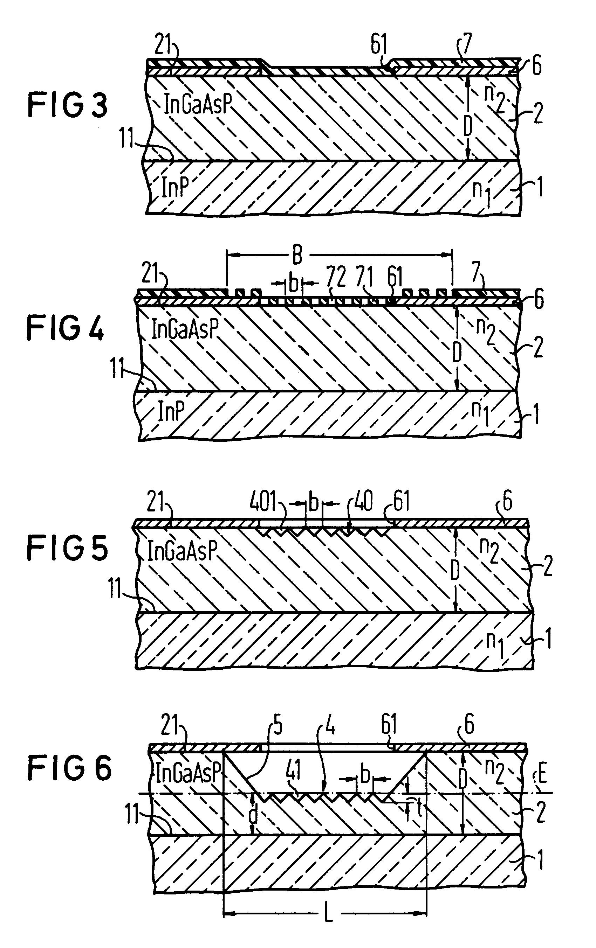

Auf die Metallschicht 6 und die im Bereich des Fensters 61 freiliegende Oberfläche 21 des Wellenleiters 2 wird erneut eine Fotolackschicht aufgeschleudert, so daß die in der Figur 3 dargestellte Struktur entsteht, in der die aufgeschleuderte Fotolackschicht mit 7 bezeichnet ist. Diese Fotolackschicht 7 wird im Bereich des Fensters 61 mit einem, beispielsweise mittels Laserlicht erzeugten, Interferenzmuster in Form eines Gitters belichtet, das aus parallelen Lichtstreifen besteht, deren Gitterkonstante gleich der Gitterkonstanten b des späteren Gitters gewählt ist. Danach wird die Fotolackschicht 7 entwickelt, wonach die in Figur 4 gezeigte Struktur entsteht. Im Bereich B der Belichtung sind schmale Fotolackstreifen 71 stehengeblieben, die durch schmale streifenförmige Zwischenräume 72 voneinander getrennt sind. Je nach Art des verwendeten Fotolacks können die Zwischenräume 72 oder die Fotolackstreifen 71 unter den Lichtstreifen des Interferenzmusters entstanden sein. Die Gitterkonstante der aus den Fotolackstreifen 71 bestehenden Gitterstruktur ist gleich der Gitterkonstanten b des zu erzeugenden Gitters 4.

Nun wird mit einem anisotrop wirkenden Ätzmittel, das im Bereich des Fensters 61 in den Zwischenräumen 72 in Figur 4 auf die Oberfläche 21 des Wellenleiters 2 einwirkt und die (lll)-Flächen der Kristallstruktur des InGaAsP freilegt. Beispielsweise ist eine Mischung aus zehn Teilen 48%igem HBr, einem Teil gesättigten Bromwassers und 40 Teilen H₂O geeignet.

Durch diesen Ätzvorgang entsteht in der Oberfläche 21 des Wellenleiters 2 das in der Figur 5 dargestellte Gitter 40, dessen Furchen 401 im Profil V-förmig oder dreieckförmig sind und dessen Gitterkonstante gleich b ist. Die Streifen 71 aus Fotolack und die Fotolackschicht 7 selbst sind in der Figur 5 als fortgenommen gedacht, obwohl dies zu diesem Zeitpunkt noch nicht erforderlich ist.

Das Gitter 40 in Figur 5 wird nun durch längeres Einwirkenlassen des genannten Ätzmittels unverändert in die Tiefe übertragen. Dieser Vorgang erfolgt von selbst und ist bereits in der älteren deutschen Patentanmeldung P 35 14 301.0 (=VPA 85 P 1257 DE) eingehend beschrieben worden. Als Ätzmaske wirkt bei diesem Vorgang die Metallschicht 6 mit dem Fenster 61. Das Fenster 61 bestimmt die räumliche Ausdehnung des zu erzeugenden Gitters und der entstehenden Vertiefung im Wellenleiter 2. Das genannte Ätzmittel muß so lange einwirken, bis das Gitter 40 auf die vorbestimmte verminderte Dicke d abgesenkt ist, wo es dann das zu erzeugende Gitter 4 mit den V-förmigen Furchen 41 in Figur 6 bildet, das auf dem Boden der Vertiefung 5 ausgebildet ist.

Nach Entfernung der Metallschicht 6 wird auf den Wellenleiter 2 epitaktisch die Schicht 3 aus InP aufgewachsen, so daß die in Figur 1 dargestellte Struktur entsteht. Bei diesem Schritt nimmt die konstante Korrugationstiefe t des Gitters 4 geringfügig ab.

## Patentansprüche

1. Kantenfilter für die integrierte Optik in Form eines reliefartigen Oberflächengitters (4) auf einem Schicht- oder Streifenwellenleiter (2), **dadurch gekennzeichnet**, daß das Gitter (4) in einem Bereich (L) verminderter Schichtdicke (d) des Wellenleiters (2) ausgebildet ist und eine konstante Korrugationstiefe (t) aufweist.

2. Filter nach Anspruch 1, **dadurch gekennzeichnet**, daß das Gitter (4) in einer Ebene (E) ausgebildet ist.

3. Filter nach Anspruch 1 oder 2, **dadurch gekennzeichnet**, daß das Gitter (4) in einem Bereich (L) mit konstanter verminderter Schichtdicke (d) des Wellenleiters (2) ausgebildet ist.

4. Filter nach einem der vorhergehenden Ansprüche, **dadurch gekennzeichnet**, daß sich das Gitter (4) in einem Bereich (L) verminderter Schichtdicke (d) erstreckt, der durch eine im Wellenleiter (2) ausgebildete Vertiefung (5) definiert ist.

5. Filter nach Anspruch 4, **dadurch gekennzeichnet**, daß das Gitter (4) auf dem Boden der Vertiefung (5) ausgebildet ist.

6. Filter nach Anspruch 4 oder 5, **dadurch gekennzeichnet**, daß die Vertiefung (5) ein im wesentlichen trapez- oder kastenförmiges Profil aufweist.

7. Filter nach einem der vorhergehenden Ansprüche, **dadurch gekennzeichnet**, daß der das Gitter (4) enthaltende Bereich (L) verminderter Schichtdicke (d) des auf einem Substrat (1) aufgebrachten Streifen- oder Schichtwellenleiters (2) mit einer Schicht (3) abgedeckt ist, deren Brechzahl wie die des Substrats (1) kleiner als die Brechzahl des Wellenleiters (2) ist.

8. Filter nach Anspruch 7, **dadurch gekennzeichnet**, daß das Substrat (1) und die den Streifen- oder Schichtwellenleiter (2) abdeckende Schicht (3) aus InP und der Streifen- oder Schichtwellenleiter (2) selbst aus InGaAsP besteht.

9. Verfahren zur Herstellung eines Filters nach einem der vorhergehenden Ansprüche, **dadurch gekennzeichnet**, daß ein Schicht- oder Streifenwellenleiter (2) mit einer ein Fenster (61) und im Fenster (61) eine Gitterstruktur (71, 72) aufweisenden Ätzmaske (6) abgedeckt und dann einem anisotrop wirkenden Ätzmittel so lange ausgesetzt wird, bis sich die Schichtdicke des Wellenleiters (2) auf einen gewünschten Wert (d) vermindert hat.

10. Verfahren nach Anspruch 9, **dadurch gekennzeichnet**, daß die Ätzmaske (6) mit dem Fenster (61) und der Gitterstruktur (71, 72) im Fenster (61) derart erzeugt wird, daß auf den Wellenleiter (2) eine dünne Metallschicht (6) mit einem Fenster (61) und auf die Metallschicht (6) eine Fotolackschicht (7) aufgebracht wird und daß die Fotolackschicht (7) im Bereich des Fensters (61) der Metallschicht (6) mit einem der Gitterstruktur des zu erzeugenden Gitters (4) entsprechenden Lichtmuster belichtet und danach der Fotolack (7) entwickelt wird.

11. Verfahren nach Anspruch 9 oder 10, **dadurch gekennzeichnet**, daß das rechteckförmige Fenster (61) der Ätzmaske (6) so orientiert wird, daß die durch den anisotropen Ätzvorgang entstehenden Gitterlinien (41) parallel zu einem Seitenrand des Rechtecks verlaufen.

## Claims

1. Cut-off filter for integrated optics in the form of a relief-like surface grating (4) on a layer waveguide or strip waveguide (2), characterised in that the grating (4) is constructed in a region (L) of reduced layer thickness (d) of the waveguide (2) and exhibits a constant corrugation depth (t).

2. Filter according to Claim 1, characterised in that the grating (4) is constructed in a plane (E).

3. Filter according to Claim 1 or 2, characterised in that the grating (4) is constructed in a region (L) with constant reduced layer thickness (d) of the waveguide (2).

4. Filter according to one of the preceding claims, characterised in that the grating (4) extends in a region (L) of reduced layer thickness (d), which region is defined by a depression (5) formed in the waveguide (2).

5. Filter according to Claim 4, characterised in that the grating (4) is constructed on the floor of the depression (5).

6. Filter according to Claim 4 or 5, characterised in that the depression (5) exhibits a substantially trapezoidal or box-shaped profile.

7. Filter according to one of the preceding claims, characterised in that the region (L) - including the grating (4) - of reduced layer thickness (d) of the strip waveguide or layer waveguide (2) applied on a substrate (1) is covered over with a layer (3), the refractive index of which, just like that of the substrate (1), is smaller than the refractive index of the waveguide (2).

8. Filter according to Claim 7, characterised in that the substrate (1) and the layer (3) which covers the strip waveguide or layer waveguide (2) consist of InP, and the strip waveguide or layer waveguide (2) itself consists of InGaAsP.

9. Method for manufacturing a filter according to one of the preceding claims, characterised in that a layer waveguide or strip waveguide (2) is covered with an etch mask (6) exhibiting a window (61) and, in the window (61), a grating structure (71, 72), and is then exposed to an anisotropically acting etching medium until such time as the layer thickness of the waveguide (2) has decreased to a desired value (d).

10. Method according to Claim 9, characterised in that the etch mask (6) with the window (61) and the grating structure (71, 72) in the window (61) is generated in such a way that a thin metal layer (6) with a window (61) is applied to the waveguide (2) and a photoresist layer (7) is applied to the metal layer (6), and in that in the region of the window (61) of the metal layer (6) the photoresist layer (7) is exposed using a light pattern corresponding to the grating structure of the grating (4) to be produced, and the photoresist (7) is thereafter developed.

11. Method according to Claim 9 or 10, characterised in that the rectangular window (61) of the etch mask (6) is oriented so that the grating lines (41) created by the anisotropic etching process extend parallel to a lateral edge of the rectangle.

## Revendications

1. Filtre à arêtes pour l'optique intégrée, sous la forme d'un réseau superficiel du type en relief (4) sur un guide d'ondes en forme de couche ou de bande (2), caractérisé par le fait que la grille (4) est réalisée dans une partie (L) qui possède une épaisseur de couche réduite (d) du guide d'ondes (2) et possède une profondeur constante d'ondulation (t).

2. Filtre suivant la revendication 1, caractérisé par le fait que le réseau (4) est formé dans un plan (E).

3. Filtre suivant la revendication 1 ou 2, caractérisé par le fait que le réseau (4) est formé dans une partie (L) du guide d'ondes (2), qui possède une épaisseur de couche réduite constante (d).

4. Filtre suivant l'une des revendications précédentes, caractérisé par le fait que le réseau (4) s'étend dans une partie (L) possédant une épaisseur de couche réduite (d) , qui est définie par un renfoncement (5) formé dans le guide d'ondes (2).

5. Filtre suivant la revendication 4, caractérisé par le fait que le réseau (4) est formé dans le fond du renfoncement (5).

6. Filtre suivant la revendication 4 ou 5, caractérisé par le fait que le renfoncement (5) possède un profil sensiblement en forme de trapèze ou de boîte.

7. Filtre suivant l'une des revendications précédentes, caractérisé par le fait que la partie (L) à épaisseur de couche réduite (d), qui contient le réseau (4), du guide d'ondes en forme de bande ou de couche (2), déposé sur un substrat (1), est recouvert par une couche (3), dont l'indice de réfraction est, comme celui du substrat (1), inférieur à l'indice de réfraction du guide d'ondes (2).

8. Filtre suivant la revendication 7, caractérisé par le fait que le substrat (1) et la couche (3) qui recouvre le guide d'ondes en forme de bande ou de couche (2), sont formés de InP et que le guide d'ondes en forme de bande ou de couche (2) lui-même est formée de InGaAsp.

9. Procédé pour fabriquer un filtre suivant l'une des revendications précédentes, caractérisé par le fait qu'on recouvre un guide d'ondes en forme de couche ou de bande (2) avec un masque de corrosion (6) possédant une fenêtre (61) et une structure de grille (71,72) située dans cette fenêtre (61), et on soumet ensuite le guide d'ondes à un agent corrosif à action anisotrope jusqu'à ce que l'épaisseur de couche du guide d'ondes (2) ait été réduite à une valeur désirée (d).

10. Procédé suivant la revendication 9, caractérisé par le fait qu'on forme le masque de corrosion (6) équipé de la fenêtre (61) et de la structure de grille (71,72) située dans la fenêtre (61) en déposant sur le guide d'ondes (2) une mince couche métallique (6) possédant une fenêtre (61), et sur la couche métallique (6), une couche de photolaque (7), et en exposant la couche de photolaque (7) dans la zone de la fenêtre (61) de la couche métallique (6) avec un modèle de lumière correspondant à la structure du réseau (4) devant être produit et qu'on développe ensuite la photolaque (7).

11. Procédé suivant la revendication 9 ou 10, caractérisé par le fait qu'on oriente la fenêtre rectangulaire (61) du masque de corrosion (6) de manière que les traits (41) du réseau, qui sont formés lors de l'opération de corrosion anisotrope, soient parallèles à un bord latéral du rectangle.
